# EUROPEAN PATENT APPLICATION

(11) **EP 2 595 356 A1**
(43) Date of publication of application: **22.05.2013**
(21) Application number: 12192441.9
(22) Date of filing: 13.11.2012
(51) Int. Cl.: H04L 29/06, H04W 36/14, H04W 28/24, H04W 36/30, H04W 36/00

(54) **Wireless communication apparatus, system and method**

(30) Priority: 17.11.2011 JP 2011252074
(71) Applicant: Fujitsu Mobile Communications Limited, Kawasaki-shi, Kanagawa 211-8588 (JP)
(72) Inventor: Tamura, Toshiya, Kawasaki-shi, Kanagawa 211-8588 (JP)
(74) Representative: Lewin, David Nicholas

(57) **Abstract**

A wireless communication apparatus (100) includes a switching unit (12, 107) to switch a tireless communication unit (13, 101, 14, 102) to perform streaming communication of a content played back by a streaming playback unit (16, 105) from a first wireless communication unit (13, 101) to a second wireless communication unit (14, 102) when a communication quality decision unit (12, 104) decides that communication quality of the first wireless communication unit performing streaming communication of a content does not satisfy a criterion and the communication quality of the second wireless communication unit satisfies the criterion and a transmitting apparatus decision unit (15, 106) decides that the other wireless communication unit is capable of transmitting the contents in the communication scheme of the second wireless communication apparatus.

## Description

### FIELD

The embodiments discussed herein are related to a wireless communication apparatus including a plurality of wireless communication units with different communication schemes, a wireless communication system including the wireless communication apparatus, and a wireless communication method using a plurality of wireless communication units with different communication schemes.

### BACKGROUND

Conventionally, a wireless communication apparatus having a plurality of wireless communication units with different communication schemes has been known.

The communication schemes of the wireless communication unit include for example, Bluetooth (registered trademark: based on Bluetooth Specification version3.0+HS), WLAN (Wireless Local Area Network: for example, based on IEEE Std 802.11) and the like.

The communication terminal having a digital mobile phone being an example of the wireless communication apparatus includes, for example, those based on Digital Living Network Alliance(DLNA) Guideline ver1.5 and the IMT-2000 standard or the IMT-Advanced standard.

As an example, the streaming playback is performed by installing the music player application, connecting the mobile phone holding the music source and the head seat being the playback device with Bluetooth, and transferring audio data being the content from the mobile phone to the head set.

As another example, the streaming playback is performed by connecting a stationary television set in a house being the moving image source and the mobile phone being the playback device with Bluetooth, and transferring moving image data being the content from the television set to the mobile phone.

Incidentally, in the wireless communication apparatus, a method to select the communication scheme based on the reception condition such as the SN ratio, power consumption or the remaining battery capacity.

In addition, in the wireless communication apparatus, a method to check communication schemes shared with a device with which connection is required, and to select a communication method that satisfies a predetermined condition from the checked communication schemes.
Patent Document 1: Japanese Laid-open Patent Publication No. 2006-254508
Patent Document 2: Japanese Laid-open Patent Publication No. 2010-166355
Patent Document 3: Japanese Laid-open Patent Publication No. 2011-155353
Non-Patent Document 1: Bluetooth Specification version3.0+HS
Non-Patent Document 2: IEEE Std 802.11(2007)
Non-Patent Document 3: Digital Living Network Alliance (DLNA) Guideline ver1.5

### SUMMARY

Accordingly, it is an object in one aspect of the embodiment to provide a wireless communication apparatus, a wireless communication system, and a wireless communication method that can perform a streaming communication, appropriately even when communication quality of the streaming communication deteriorates.

According to an aspect of the embodiments, a wireless communication apparatus, a wireless communication system and a wireless communication method disclosed herein make it possible to perform streaming communication appropriately even when the communication quality of streaming communication deteriorates.

According to an aspect of the embodiments, a wireless communication apparatus disclosed herein includes a first wireless communication unit; a second wireless communication unit with a different communication scheme from the first wireless communication unit; a streaming playback unit to perform streaming playback of a content received by the first wireless communication apparatus or the second wireless communication apparatus; and a processor. The processor performs processes of: monitoring communication quality of the first wireless communication unit and the second wireless communication unit; deciding whether monitored communication quality satisfies a criterion determined in advance; deciding whether an other wireless communication apparatus is capable of transmitting the content in a predetermined communication scheme; when it is decided that the communication quality of the first wireless communication unit performing streaming communication of the content does not satisfy the criterion and that the communication quality of the second wireless communication unit satisfies the criterion and that the other wireless communication unit is capable of transmitting the contents in the communication scheme of the second wireless communication apparatus, switching the wireless communication unit to perform streaming communication of a content played back by the streaming playback unit from the first wireless communication unit to the second wireless communication unit.

According to an aspect of the embodiments, a wireless communication system disclosed herein includes: a content receiving apparatus being the wireless communication; and a content transmitting apparatus to transmit a content to the content receiving apparatus. The content transmitting apparatus include: a first transmitting-side wireless communication unit connectable to the first wireless communication unit of the content receiving apparatus; a second transmitting-side wireless communication unit connectable to the second wireless communication unit of the content receiving apparatus; and a processor. The processor performs processes of: monitoring communication quality of the first transmitting-side wireless communication unit and the second transmitting-side wireless communication unit; deciding whether monitored communication quality satisfies a criterion; and when it is decided that the communication quality of the first transmitting-side wireless communication unit performing streaming communication of the content does not satisfy the criterion and there is a request from the processor of the content receiving apparatus to switch the transmitting-side wireless communication unit to perform streaming communication from the first transmitting-side wireless communication unit to the second transmitting-side wireless communication unit, switching the transmitting-side wireless communication unit to perform streaming communication from the first transmitting-side wireless communication unit to the second transmitting-side wireless communication unit.

A wireless communication method disclosed herein uses a first wireless communication unit and a second wireless communication unit with a different communication scheme from the first wireless communication unit. The wireless communication method includes: performing, by a streaming playback unit, streaming playback of a content received by the first wireless communication unit; monitoring, by a processor, communication quality of the first wireless communication unit; deciding, by the processor, whether the communication quality of the first wireless communication unit satisfy a criterion decided in advance; when it is decided that the communication quality of the first wireless communication unit does not satisfy the criterion, monitoring, by the processor, communication quality of the second wireless communication unit; deciding, by the processor, whether the communication quality of the second wireless communication unit satisfies a criterion determined in advance and whether an other wireless communication apparatus is capable of transmitting the content in the communication scheme of the second wireless communication unit; and when it is determined that the communication quality of the second wireless communication unit satisfies the criterion determined in advance and that the other wireless communication apparatus is capable of transmitting the content in the communication scheme of the second wireless communication unit, switching, by the processor, the wireless communication unit to perform streaming communication from the first wireless communication unit to the second wireless communication unit.

### BRIEF DESCRIPTION OF DRAWINGS

Figs. 1A and 1B are explanatory diagrams for explaining the outline of an embodiment.
Fig. 2 is a configuration diagram illustrating a wireless communication system according to an embodiment.
Fig. 3 is a configuration diagram illustrating a wireless communication system according to an embodiment.
Figs. 4A and 4B are first sequence diagrams in an embodiment.
Figs. 5A and 5B are second sequence diagrams in an embodiment.
Figs. 6A and 6B are third sequence diagrams in an embodiment.
Figs. 7A and 7B are fourth sequence diagrams in an embodiment.
Fig. 8 is an explanatory diagram for explaining overlapping of streaming data.

### DESCRIPTION OF EMBODIMENTS

During streaming playback, for example, by putting the mobile phone in a hip packet of trousers, the radio wave may be interfered by the human body entering between the mobile phone and the head seat.

Alternatively, during streaming playback, when a stationary TV set in a house being the moving image source and a mobile phone being thee playback device and the mobile phone is brought outdoor, the distance between the TV set and the mobile phone is expanded and sufficient radio wave characteristics may not be obtained.

In such situations as described above, problems such as broken sound due to missing audio data and drop frame due to missing moving image data occur.

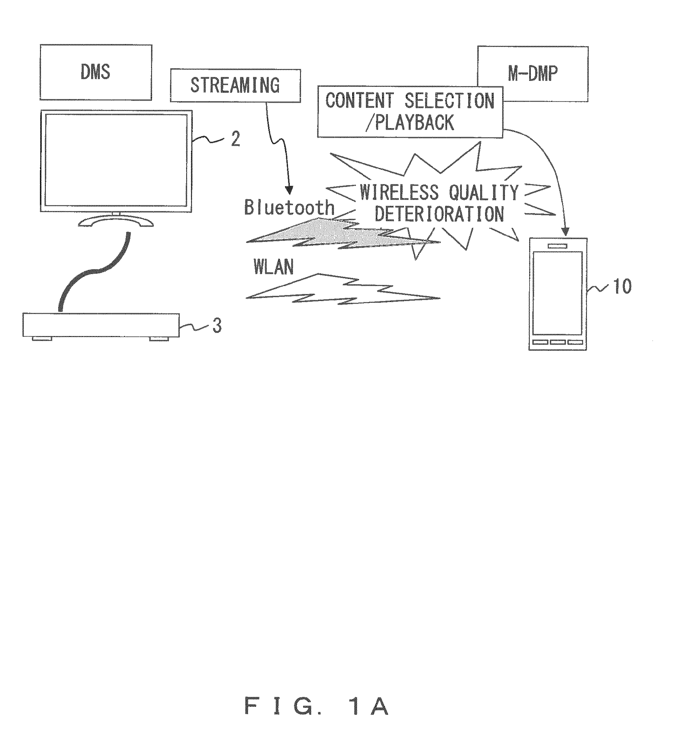

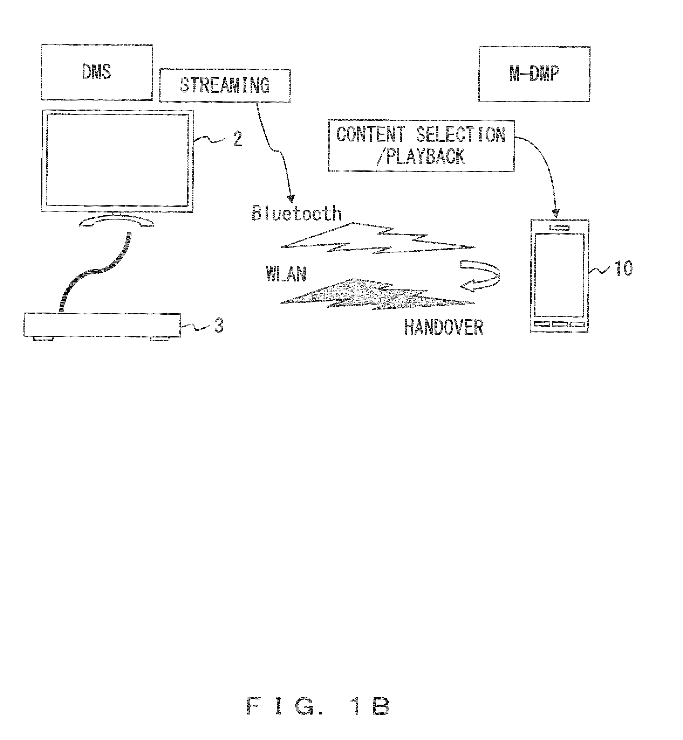

FIG. 1A and FIG. 1B are explanatory diagrams for explaining the outline of an embodiment.

A mobile phone (mobile communication terminal) 10 being an example of a wireless communication apparatus (content receiving apparatus) is equipped with the Bluetooth A2DP (Advanced Audio Distribution Profile) SNK (sink) function and M-DMP (Mobile-Digital Media Player) function, and performs selection and playback of streaming contents.

AV devices such as a TV set 2 and a recorder 3 and the like are equipped with the Bluetooth A2DP SRC (source) function and DLNA DMS (Digital Media Server) function.

As illustrated in FIG. 1A, a condition is considered in which the mobile phone 10 and the AV devices 2, 3 are connected via Bluetooth, an A2DP session for performing music playback service is established, and streaming playback at the mobile phone 10 is performed.

Here, when the distance between devises (between the mobile phone 10 and the AV devices 2, 3) is expanded as the user having the mobile phone 10 go outside the house for example, the communication quality deteriorates, and troubles such as broken sound, drop frame and the like occur in the streaming playback.

While details are to be described later, at this time, check is performed as to whether or not WLAN (an example of the communication scheme of a second wireless communication unit) whose transmission poser is larger (or whose radio wave characteristics are stronger or whose communication capacity is larger) than Bluetooth (an example of the communication scheme of a first wireless communication) is available.

In addition, determination as to whether the communication quality of WLAN is secured and data transfer procedures using WLAN with which streaming playback of the contents being played back is possible are supported by the AV devices 2, 3, and the streaming communication is possible by WLAN in that condition.

When it is determined that the streaming communication is possible by WLAN in the condition, the WLAN connection is established, and transfer of desired contents is started by the DLNA. Then, as illustrated in FIG. 1B, troubles such as broken sound may be avoided by handover (switching) of the wireless connection for streaming connection.

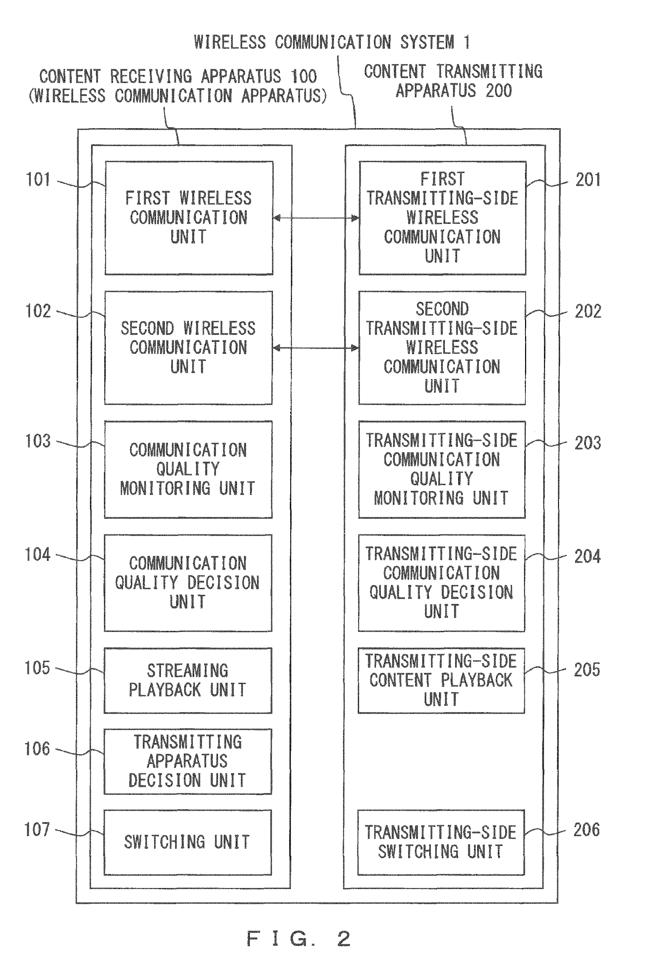

Fig. 2 is a configuration diagram illustrating a wireless communication system according to an embodiment.

The wireless communication system 1 includes a content receiving apparatus (wireless communication apparatus) 100 and a content transmitting apparatus 200.

The content receiving apparatus 100 is a wireless communication apparatus including a plurality of wireless communication units including a first wireless communication unit 101 and a second wireless communication unit 102 whose communication scheme is different from the first wireless communication unit 101 and whose transmission power is larger than first wireless communication unit 101 for example.

The communication scheme of the first wireless communication unit 101 is, for example, Bluetooth, and the communication scheme of the second wireless communication unit 102 is, for example, WLAN. Meanwhile, as the communication scheme, other communication schemes such as LTE, WiMAX may also be used. In addition, three or more wireless communication units may be switched in a stepped way.

The content receiving apparatus 100 further includes a communication quality monitoring unit 103, a communication quality decision unit 104, a streaming playback unit 105, a transmitting apparatus decision unit 106, and a switching unit 107.

The communication quality monitoring unit 103 monitors the communication quality of the plurality of wireless communication units 101,102.

The communication quality decision unit 104 decides whether the communication quality monitored by the communication quality monitoring unit 103 satisfies a criterion determined in advance.

The streaming playback unit 105 performs the streaming playback of contents such as audio data, moving image data and the like received by either of the plurality of wireless communication units 101, 102.

The transmitting apparatus decision unit 106 decides whether another wireless communication apparatus such as the content transmitting apparatus 200 is able to transmit contents in a predetermined communication scheme (for example, the communication scheme of the second wireless communication unit).

The switching unit 107 switches the wireless communication unit to perform the streaming communication from the first wireless communication unit 101 to the second wireless communication unit 102, when the following three decision conditions are satisfied.

The first of the three decision conditions is that the communication quality decision unit 104 decides that the communication quality of the first wireless communication unit 101 performing the streaming playback of the contents does not satisfy the criterion.

The second of the three decision conditions is that the communication quality decision unit 104 decides that the communication quality of the second wireless communication unit 102 satisfies the criterion.

The third of the three decision conditions is that the transmitting apparatus decision unit 106 decides that the content transmitting apparatus 200 is able to transmit contents in a predetermined communication scheme (the communication scheme of the second wireless communication unit 102).

The content transmitting apparatus 200 includes a plurality of transmitting-side wireless communication unit 201, 202, a transmitting-side communication quality monitoring unit 203, a transmitting-side communication quality decision unit 204, contents playback unit 205, and a transmitting-side switching unit 206.

The plurality of transmitting-side wireless communication unit 201, 202 includes a first transmitting-side wireless communication unit 201 that is connectable to the first wireless communication unit 101 of the content receiving apparatus 100, and a second transmitting-side wireless communication unit 202 that is connectable to the second wireless communication unit 102 of the content receiving apparatus 100.

The transmitting-side communication quality monitoring unit 203 monitors the communication quality of the plurality of transmitting-side wireless communication unit 201, 202.

The transmitting-side communication quality decision unit 204 decides whether the communication quality monitored by the transmitting-side communication quality monitoring unit 203 satisfies a criterion determined in advance.

The contents playback unit 205 plays back contents transferred from first transmitting-side wireless communication unit 201 or the transmitting-side wireless communication unit 202 to the content receiving apparatus 100, for transfer.

The transmitting-side switching unit 206 switches the wireless communication unit to perform the streaming communication from the first transmitting-side wireless communication unit 201 to the second transmitting-side wireless communication unit 202 when the following two conditions are satisfied.

The first of the two conditions is that the transmitting-side communication quality decision unit 204 decides that the communication quality of the first transmitting-side wireless communication unit 201 performing the streaming communication of the contents does not satisfy the criterion.

The second of the two conditions is that the switching unit 107 of the content receiving apparatus 100 makes a request to switch the transmitting-side wireless communication unit 201, 202 to perform the streaming communication from the first transmitting-side wireless communication unit 201 to the second transmitting-side wireless communication unit 202.

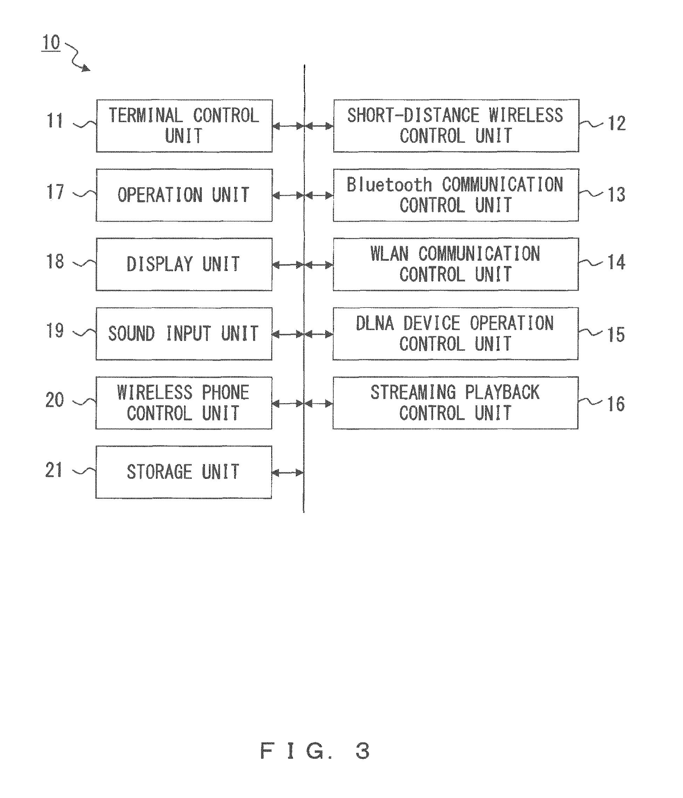

FIG. 3 is a configuration diagram illustrating the mobile phone 10 according to an embodiment.

The mobile phone 10 (communication terminal) being an example of the content receiving apparatus 100 or the content transmitting apparatus 200 includes a terminal control unit 11, a short-distance wireless communication unit 12, a Bluetooth communication control unit 13, a WLAN communication control unit 14, a DLNA device operation control unit 15, a streaming playback control unit 16, an operation unit 17, a display unit 18, a sound input unit 19, a wireless phone communication unit 20, and a storing unit 21.

When the mobile phone 10 is the content receiving apparatus 100 or the content transmitting apparatus 200, the short-distance wireless communication unit 12 functions as an example of the communication quality monitoring unit 103, the transmitting-side communication quality monitoring unit 203, the communication quality decision unit 104 or the transmitting-side communication quality decision unit 204, and the switching unit 107 or the transmitting-side switching unit 206 illustrated in FIG. 2. The DLNA device operation control unit 15 functions as an example of the transmitting apparatus decision unit 106. The streaming playback control unit 16 functions as an example of the streaming playback unit 105 or the contents playback unit 205. The Bluetooth communication control unit 13 functions as an example of the first wireless communication unit 101, the first transmitting-side wireless communication unit 201. The WLAN communication control unit 14 functions as an example of the second wireless communication unit 102, the second transmitting-side wireless communication unit 202.

The terminal control unit 11 is a CPU (an example of a processor) that control the entire software of the mobile phone 10. With the CPU, the function as the terminal control unit 11 may be provided by reading out and executing a control program stored in the storing unit 21.

The short-distance wireless communication unit 12 monitors the wireless quality of Bluetooth and WLAN. In addition, the short-distance wireless communication unit 12 decides whether the communication quality monitored by the communication quality monitoring unit 103 satisfies a criterion determined in advance. In addition, the short-distance wireless communication unit 12 switches the wireless communication unit (Bluetooth communication control unit 13, WLAN communication control unit 14) when the conditions described later are satisfied.

The Bluetooth communication control unit 13 controls data communication by Bluetooth.

The WLAN communication control unit 14 controls IEEE802.11 being an example of WLAN.

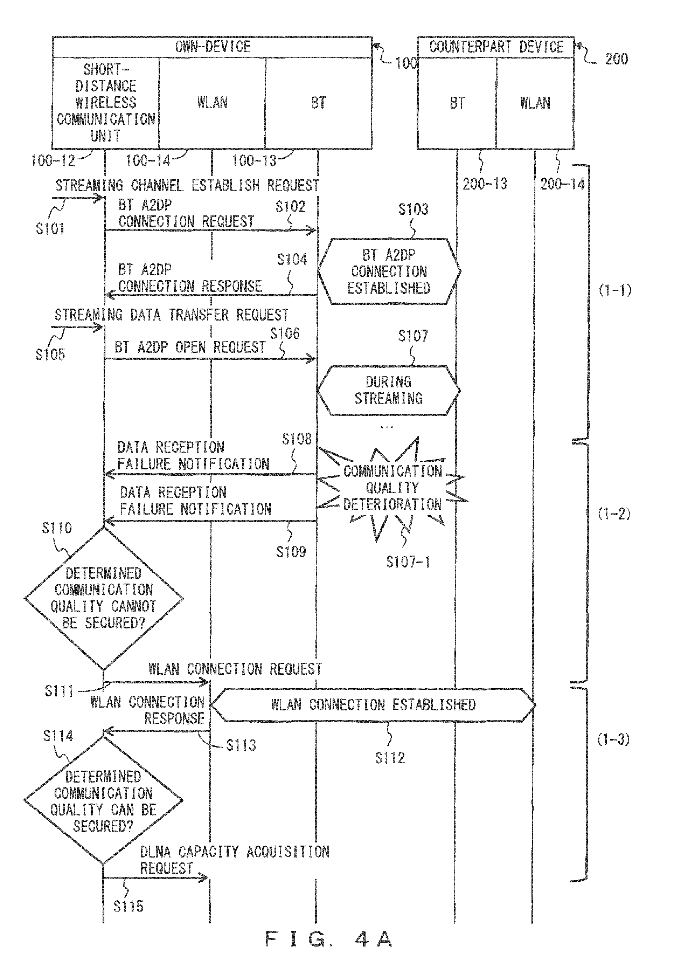

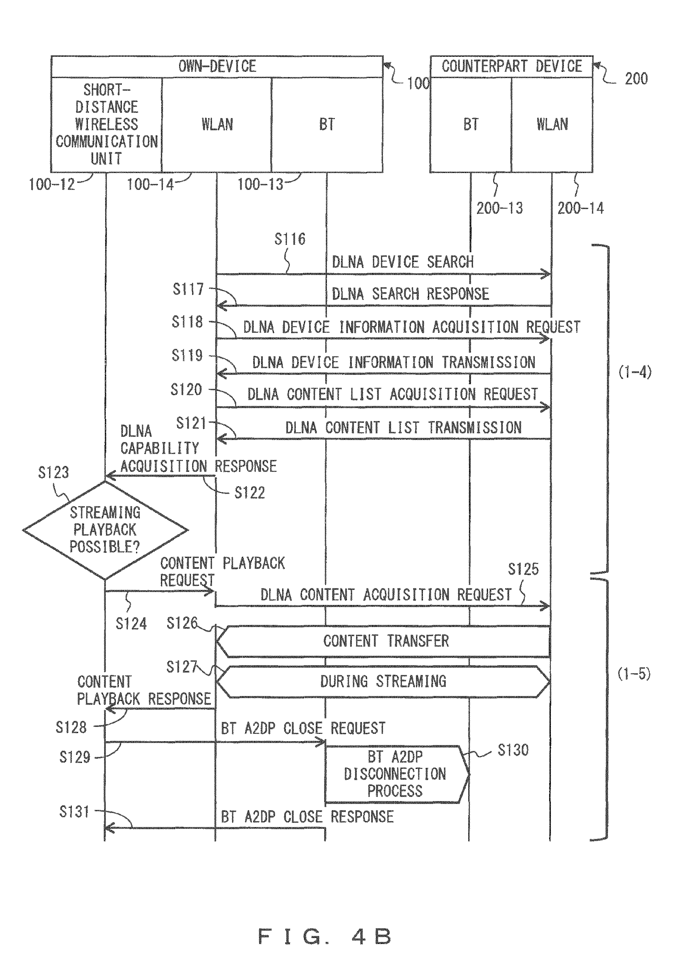

While details are described later with reference to FIGs. 4A and 4B, the short-distance wireless communication units 100-12 of the content receiving apparatus 100 (the own-device 100, being, for example, the mobile phone 10 that receives contents from the AV devices 2, 3, or, a head set that receives contents from the mobile phone 10) switches the Bluetooth communication control units 100-13 (first wireless communication unit 101) to the WLAN communication control units 100-14(second wireless communication unit 102) with a larger transmission power, when the following three conditions are satisfied.

The first of the three decision conditions is that the short-distance wireless communication units 100-12 decide that the communication quality of the Bluetooth communication control units 100-13 performing the streaming communication of the contents does not satisfy a criterion.

The second of the three decision conditions is that the short-distance wireless communication units 100-12 decide that the communication quality of the WLAN communication control units 100-14 satisfy the criterion.

The third of the three decision conditions is that the DLNA device operation control unit 15 of the content receiving apparatus 100 decides that the content transmitting apparatus 200 is able to transmit contents in a predetermined communication scheme (the communication scheme of the second wireless communication unit 102).

When these three decision conditions are satisfied, the short-distance wireless communication units 100-12 switch the wireless communication unit to perform the streaming communication of contents played back by the streaming playback control unit 16 from Bluetooth communication control units 100-13 to the WLAN communication control units 100-14.

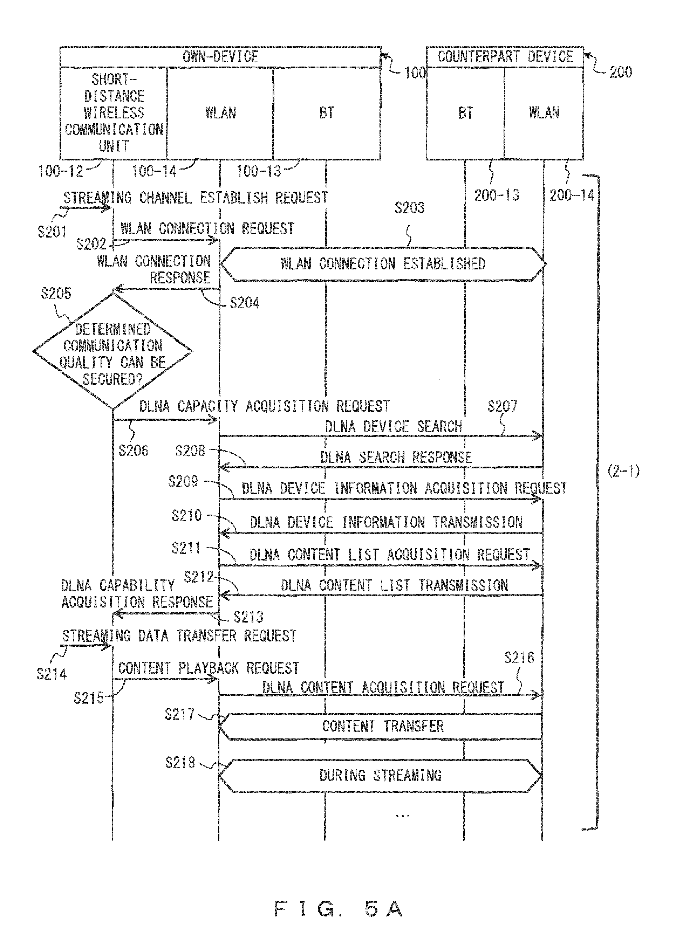

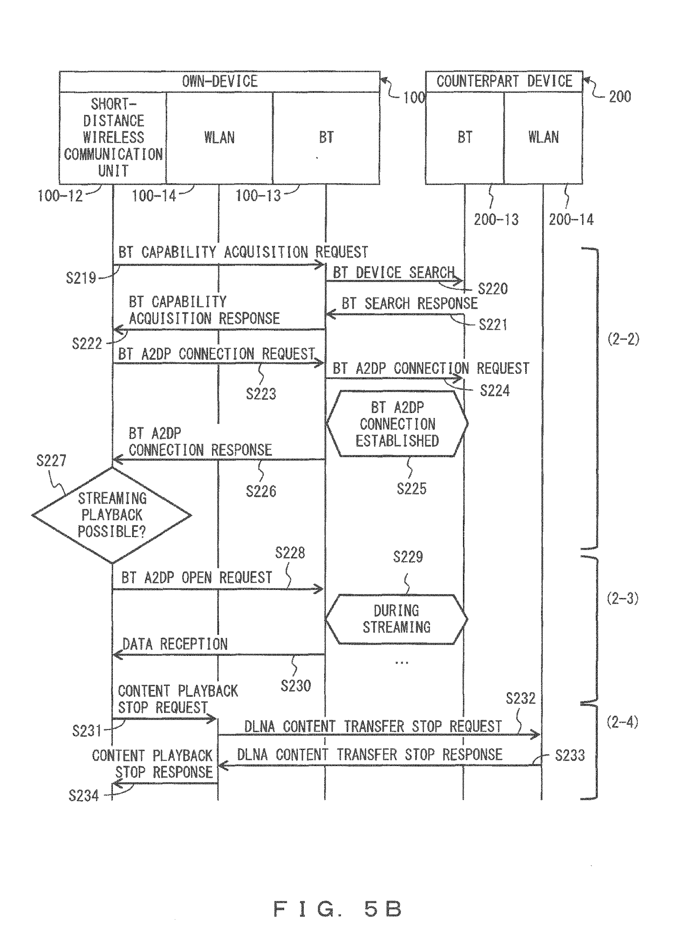

In addition, while details are described later with reference to FIGs. 5A and 5B, the short-distance wireless communication units 100-12 of the content receiving apparatus 100 decide whether the communication quality of the Bluetooth communication control units 100-13 satisfy the criterion while WLAN communication control units 100-14 are performing streaming communication of contents, by polling for example.

When the short-distance wireless communication units 100-12 decides that the criterion is satisfied, switch to the Bluetooth communication control units 100-13 is performed by the decision by the DLNA device operation control unit 15 that the WLAN communication control units 100-14 are able to transmit contents in the communication scheme of the WLAN communication control units 100-14.

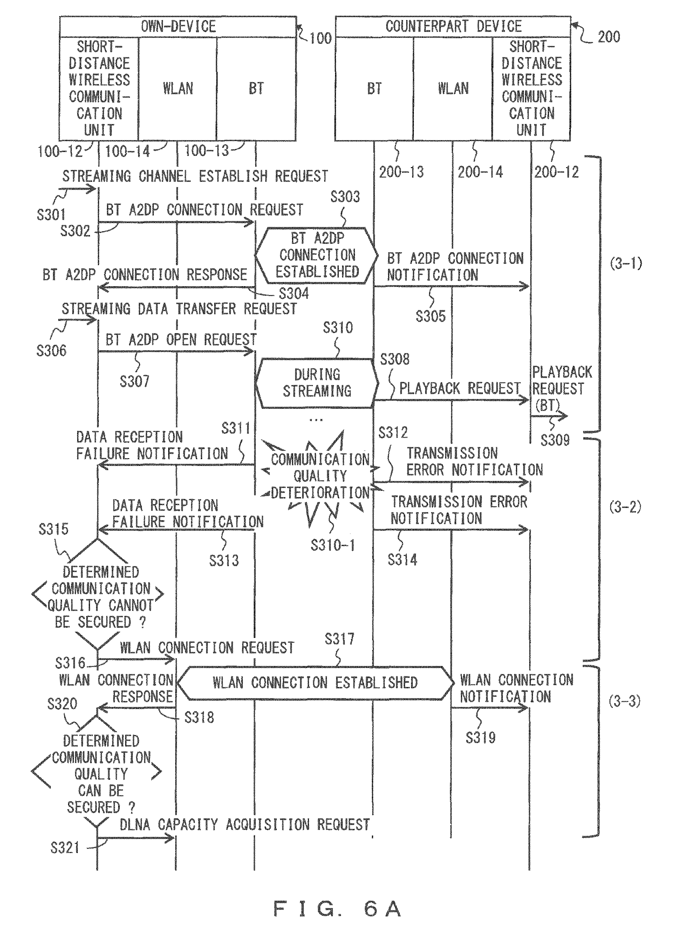

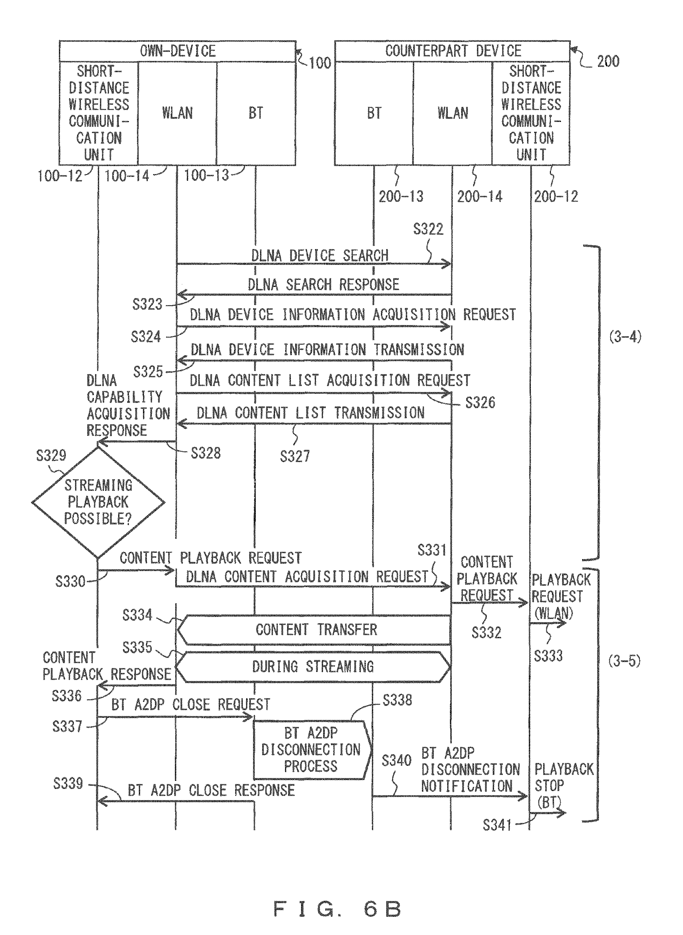

In addition, while details are described later with reference to FIGs. 6A and 6B, the short-distance wireless communication units 200-12 of the content transmitting apparatus 200 switch the Bluetooth communication control units 200-13 to the WLAN communication control units 200-14 when the following two conditions are satisfied.

One of the two conditions is that the short-distance wireless communication units 200-12 decide that the communication quality of the Bluetooth communication control units 200-13 does not satisfy the criterion. Another is that the short-distance wireless communication units 100-12 of the content receiving apparatus 100 make a request to switch the wireless communication unit of the transmitting side to perform the streaming communication from the Bluetooth communication control units 200-13 to the WLAN communication control units 200-14.

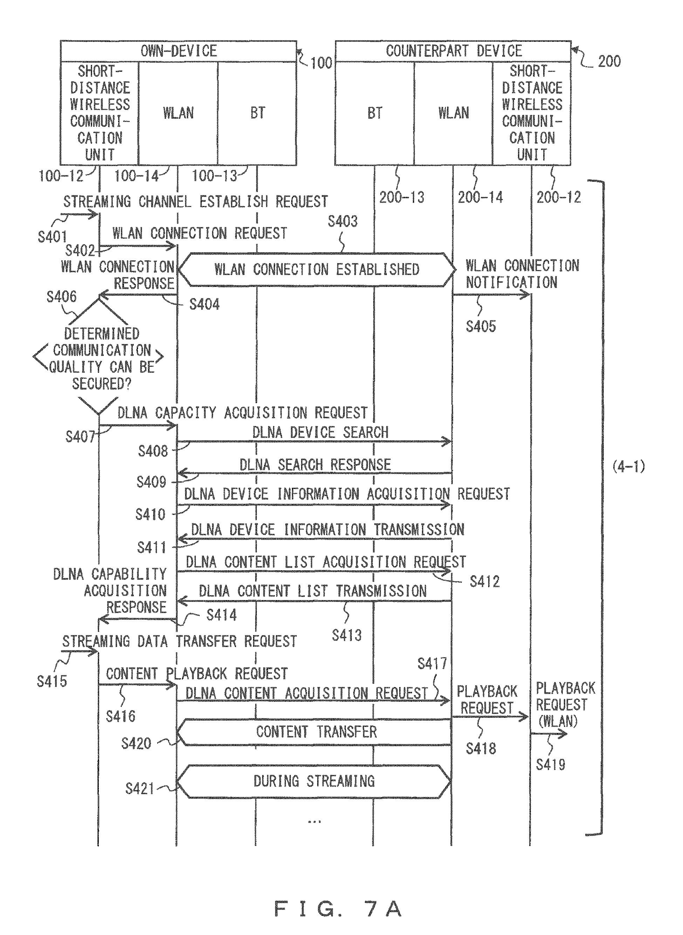

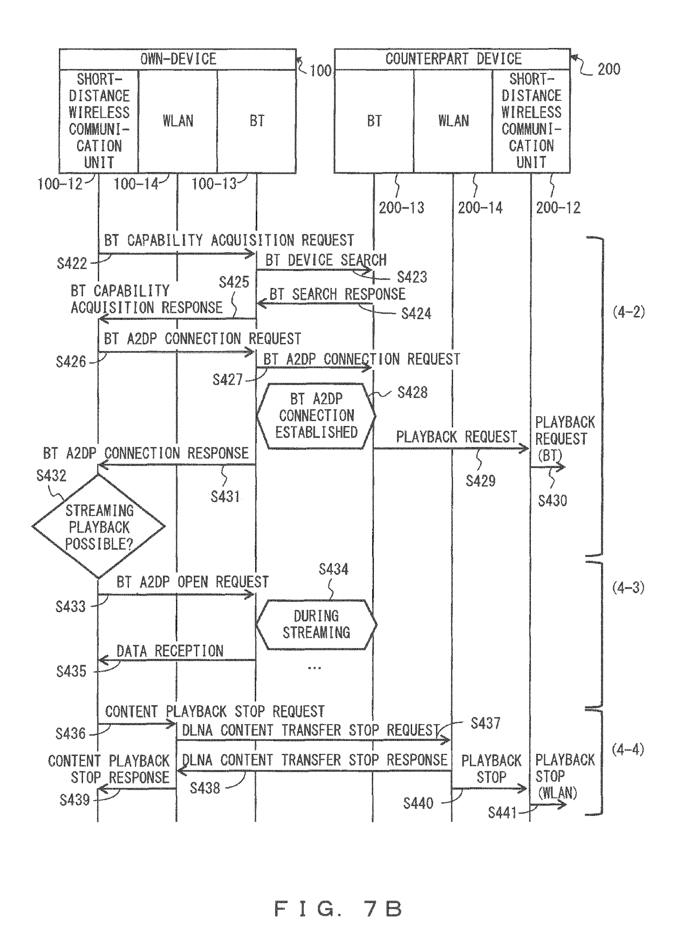

However, the content transmitting apparatus 200 may perform the switch of the wireless communication unit only with the condition that there is a request to switch the wireless communication unit on the transmitting side to perform streaming communication from the Bluetooth communication control units 200-13 to the WLAN communication control units 200-14, without monitoring and deciding the communication quality, as illustrated in FIGs. 7A and 7B.

In addition, while details are described later with reference to FIGs. 7A and 7B, the short-distance wireless communication units 200-12 performs the switch when the short-distance wireless communication units 100-12 of the content receiving apparatus 100 make a request to switch the wireless communication unit on the transmitting side to perform the screaming communication from the WLAN communication control units 200-14 to the Bluetooth communication control units 200-13.

The DLNA device operation control unit 15 controls the search of DLNA-compliant devices, acquisition of content information, content transfer, and the like.

The streaming playback control unit 16 performs, when it is used as the content transmitting apparatus 200, playback of contents specified by the user, and transfers the playback result to an available sound output destination (for example, a head set or the mobile phone 10).

In addition, it is preferable that, when the mobile phone 10 is used as the content transmitting apparatus 100, the streaming playback control unit 16 performs the streaming playback as an example of the streaming playback unit.

The operation unit 17 is input means such as a numerical keypad. The display unit 18 is output unit is output means such as an LCD. The sound input unit 19 is an input device to input sound, such as a microphone. The wireless phone communication unit 20 controls the wireless phone communication. The storing unit 21 is storage means to store setting information, the control program, and so on.

FIGs. 4A and 4B are first sequence diagrams in an embodiment.

For convenience of explanation, an example with a case in which the own-device 100 and the counterpart device 200 have the same configuration as the mobile phone 10 is explained.

First, for example, the short-distance wireless communication units 100-12 of the own-device 100 being the content receiving apparatus 100 receive a request for establishing a streaming channel by the terminal control unit 11 based on the operation in the operation unit 17 illustrated in FIG. 4A (step S101).

In addition, the short-distance wireless communication units 100-12 establishes Bluetooth A2DP connection between the Bluetooth communication control units 100-13("BT100-13" in FIG. 3) and the Bluetooth communication control units 200-13 of the counterpart device 200 being the content transmitting apparatus 200 that transmits contents (steps S102, S103).

Here, the own-device 100 is, for example, the mobile phone 10 that receives contents from the AV devices 2, 3, or a head set that receives contents from the mobile phone 10. In addition, the counterpart device 200 is the mobile phone 10 that transmits contents to the head set, or the AV devices 2, 3 that transmits contents to the mobile phone 10.

After a communication response (step S104) from the Bluetooth communication control units 100-13, for example, according to a streaming data transfer request (S105) based on the operation in the operation unit 17, the short-distance wireless communication units 100-12 of the own-device 100 makes a request for opening Bluetooth A2DP to the Bluetooth communication control units 100-13 (step S106). Accordingly, the streaming communication by the Bluetooth communication control units 100-13 is performed (step S107).

Steps S101-S107 above are the processes for Bluetooth streaming communication ((1-1) in FIG. 4A).

When the Bluetooth communication quality deteriorates below a criterion determined in advance (step S107-1), a plurality of error packets are generated (step S108, S109), Accordingly, a notification of failure in receiving data is sent from the Bluetooth communication control units 100-13 to the short-distance wireless communication units 100-12 that are monitoring the Bluetooth communication quality.

The short-distance wireless communication units 100-12 of the own-device 100 decides whether a criterion that the allowable data missing rate (transfer error rate) according to the encoding scheme and the packet size and the like is satisfied (secured), for example (step S110).

The steps 107-1 to S110 above are processes based on the deterioration in the communication quality ((1-2) in FIG. 4A).

Upon deciding that the communication quality does not satisfy the criterion (No in step S110), the short-distance wireless communication units 100-12 of the own-device 100 make the WLAN communication control units 100-14 ("WLAN100-14" in FIG. 3) establish WLAN communication between the WLAN communication control units 200-14 (steps S111, S112).

Meanwhile, for the second wireless communication unit with the WLAN communication control units 100-14 being an example, based on the communication quality monitored by the communication quality monitoring unit 103 and the power consumption, the one with the smallest power consumption among those that satisfies the criterion of the communication quality may be selected. The same applies to the second through forth sequence diagrams in FIG. 5A-FIG. 7B.

After a connection response from the WLAN communication control units 100-14 (step S113), the short-distance wireless communication units 100-12 of the own-device 100 decide whether the communication criterion determined in advance is satisfied (step S114). In a similar manner as in step S110, the decision of the communication quality may be made by whether the allowable data missing rate (transfer error rate) according to the encoding scheme, the packet size and the like is exceeded or not, for example.

Steps S111-S114 above is the processes for WLAN connection ((1-3) in FIG. 4A), while the WLAN connection may be connected to the counterpart device 2 such as an AP (access point) and the like in advance.

Upon deciding that the communication quality of the WLAN connection units 100-14 satisfy the criterion (Yes in step S114), the short-distance wireless communication units 100-12 pf the own-device give an instruction to the DLNA device operation control unit 15 illustrated in FIG. 2 and requests for obtaining the capability of DLNA devices in the surroundings using the WLAN connection (step S115).

Based on the capability acquisition request (step S115), the WLAN communication control units 100-14 search DLNA devices from other devices (such as the counterpart device 200 connected via Bluetooth) (steps S116 and S117), detect device information such as whether they are a device equipped with the DMS transmission to transmit contents in the search result (steps S118 and S119), and obtains contents information (a contents list for example) (steps S120 and S121).

According to a response to these capability acquisition request (step S122), the short-distance wireless communication units 100-12 decide whether another device (the counterpart device 200 for example) is a device that is capable of succeeding the streaming communication, that is, capable of streaming communication (content playback) by WLAN (step S123).

The steps S115-S123 above are the processes for deciding whether or not it is possible to perform streaming communication, based on the capability acquisition of another device ((1-4) in FIG. 4B).

When it is determined that the streaming communication may be succeeded by WLAN with the counterpart device 200 (Yes in step S123), the short-distance wireless communication units 100-12 of the own-device 100 issues a content playback request to the counterpart device 200 via the WLAN communication control units 100-14.

In this playback request, the WLAN communication control units 100-14 make a request for contents acquisition to the WLAN communication control units 200-14 of the counterpart device 200 (step S125), and content transfer (step S126) and streaming communication (s127) from the counterpart device 100 are started.

After a content playback response from the WLAN communication control units 100-14 (step S128), the short-distance wireless communication units 100-12 of the own-device 100 issues a close of a Bluetooth A2DP to the BT communication control units 100-13 (step S129). When Bluetooth A2DP is disconnected (step S130), the short-distance wireless communication units 100-12 receives a close response (step S131) from the BT communication control units 100-13.

Thus, the short-distance wireless communication units 100-12 issues a content transfer request to the WLAN communication control units 100-14 to start streaming communication by DLNA on WLAN, and after performing the data transfer for the streaming playback by DLNA and the data transfer by streaming by BT A2DP simultaneously for a period of time determined in advance, stop the BT A2DP streaming playback and perform the switching. That is, after the switching of the wireless communication unit to perform streaming communication, the short-distance wireless communication units 100-12 disconnect the reception of contents by the WLAN communication control units 100-14 before switching.

The steps S124-S131 above are the processes for switching the communication scheme ((1-5) in FIG. 4B).

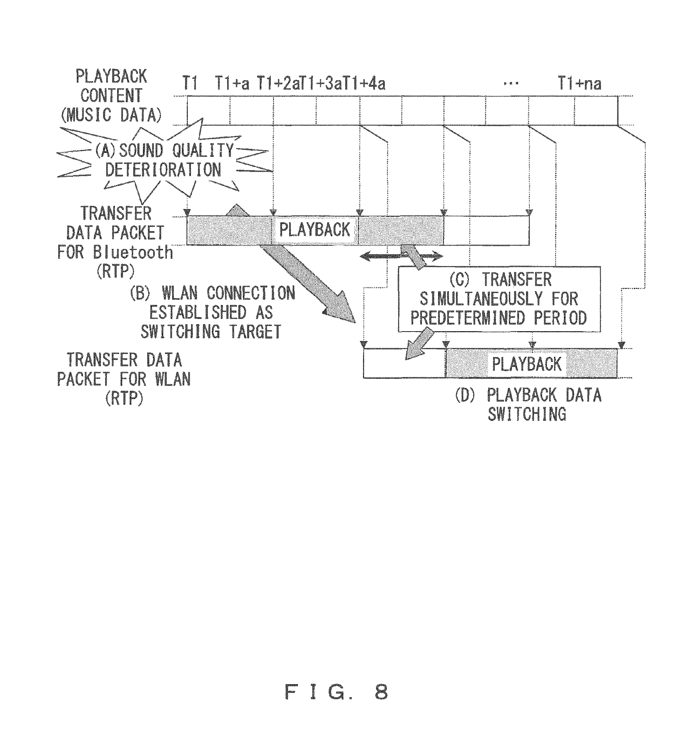

FIG. 8 is an explanatory diagram to explain the overlap of streaming data/

As illustrated in FIG. 8, the relationship of transferred playback contents (music data), its transfer data (RTP), and data (RTP) that is actually played back is illustrated.

In a similar manner as in the explanation above, when the communication quality (sound quality) deteriorates while the own-device 100 is playing back contents (streaming data) transferred via Bluetooth ((A) in FIG. 8), an attempt for WLAN communication being the switching candidate is made ((B) in FIG. 8).

When it is determined that the switching of the wireless communication unit is possible as the communication quality satisfies a criterion determined in advance and the content transmitting apparatus 200 (counterpart device 200) supports the data transfer procedures for transmitting the contents being played back, data (content) transfer is started, and after that, streaming communication using WLAN is started. Then, after performing it while overlapping with data transfer using Bluetooth for a period of time determined in advance ((C) in FIG. 8), after switching the wireless communication unit, the data transfer using Bluetooth is stopped after a predetermined period of time has passed ((D) in FIG. 8).

As illustrated in FIG. 8, after the WLAN communication is established and the content transfer is started, the streaming communication by WLAN is performed with a delay of one packet corresponding to two elements (time 2×a) of played back contents. Then, Bluetooth is disconnected after another one packet.

The period until the switching of the wireless communication unit (played back data switching) after the content transfer by WLAN is started, or the period until the disconnection of Bluetooth after the switching of the wireless communication unit may be determined according to the playback time in one packet for each content (AAC, SBC, ATRAC), the encoding scheme, the communication quality before switching (the need for switching) and the like.

Meanwhile, when there is a risk that broken sound and the like occur as the data transfer for streaming communication by DLNA in WLAN and the data transfer by streaming by BT A2DP are different and it is difficult to perform seamless switching, it is preferable to stop the streaming communication (streaming playback by the streaming playback unit) intentionally once. Then, the streaming communication (playback) may be resumed after switching to the BT A2DP data transfer from the data transfer by DLNA on WLAN. When the reception of contents by the wireless communication unit before switching is disconnected before the completion of the switching of the wireless communication unit to perform the streaming communication, the switching may be announced during the stop of the streaming communication (playback).

FIGs. 5A and 5B are second sequence diagrams in an embodiment.

In the second sequence diagram in FIGs. 5A and 5B, the short-distance wireless communication units 100-12 of the content receiving apparatus 100 decides whether the communication quality of the Bluetooth communication control units 100-13 satisfies a criterion by polling for example, while the WLAN communication control units 100-14 are performing the streaming communication of contents. Upon deciding that the criterion is satisfied, the short-distance wireless communication units 100-12 performs switching to the Bluetooth communication control units 100-13 as it is decided by the DLNA device operation control unit 15 that the WLAN communication control units 100-14 is able to transmitting contents by the communication scheme of the Bluetooth communication control units 100-13. In these points, the second sequence diagram in FIGs. 5A and 5B are different from the first sequence diagrams in FIGs. 4A and 4B.

First, based on a streaming channel establish request (step S201), the short-distance wireless communication units 100-12 makes the Bluetooth communication control units 100-13 establish WLAN communication with the Bluetooth communication control units 200-13 of the counterpart device 200 to transmit the contents (step S202, S203).

Here, the own-device 100 is, for example, the mobile phone 10 that receives contents from the AV devices 2, 3, or, a head set that receives contents from the mobile phone 10

In addition, the counterpart device 200 is, for example, the counterpart device 200 is the mobile phone 10 that transmits contents to the head set, or the AV devices 2, 3 that transmits contents to the mobile phone 10.

After a connection response from the WLAN communication, control units 100-14 (step S204), the short-distance wireless communication units 100-12 of the own-device 100 decide whether the communication quality satisfies a criterion determined in advance (step S205). The decision of the communication quality may be decided by whether the allowable data missing rate (transfer error rate) according to the encoding scheme, the packet size and the like is exceeded or not, for example, in the same manner as in steps S110 and S114 in FIG. 4A.

Upon deciding the communication quality of WLAN satisfied the criterion (Yes in step S205), the the short-distance wireless communication units 100-12 of the own-device 100 give an instruction to the DLNA device operation control unit 15 and requests for obtaining the capability of DLNA devices in the surroundings using the WLAN connection (step S206).

Based on the capability acquisition request (step S206), the WLAN communication control units 100-14 search DLNA devices from other devices (the WLAN communication control units 200-14 of the counterpart device 200) (steps S207 and S208), detect device information such as whether they are a device equipped with the DMS transmission to transmit contents in the search result (steps S209 and S210), and obtains contents information (a contents list for example) (steps S211 and S212).

According to a response to these capability acquisition request (step S213), the short-distance wireless communication units 100-12 of the own-device 100 issues a content playback request to the counterpart device 200 via the WLAN communication control units 100-14 (step S215).

According to the playback request, the WLAN communication control units 100-14 make a request for content acquisition to the WLAN communication control units 200-14 of the counterpart device 200 (step S216), and the content transfer (step S217) and the streaming communication (S218) are started.

The S201-S218 above is the processes for the WLAN streaming communication ((2-1) in FIG. 5A).

The short-distance wireless communication units 100-12 of the own-device 100 makes a request for obtaining the Bluetooth capability at intervals determined in advance (step S219).

According to the capability acquisition request (step S219), the short-distance wireless control 100-12 makes the BT communication control units 100-13 search other devices (the BT communication control units 200-13 of the counterpart device 200) (steps S220 and S221), and after an acquisition response of capability such as data for deciding the communication quality such as the RSSI (Received Signal Strength Indication) value and the like (step S222), establish Bluetooth A2DP connection with Bluetooth devices that has a possibility of becoming the connection target (steps S223-S225).

After a connection response from the Bluetooth communication control units 100-13 (step S226), the short-distance wireless communication units 100-12 of the own-device 100 decide whether or not the communication quality satisfies a criterion determined in advance, and, whether or not the counterpart device 200 supports the data transfer procedures with which streaming communication of the contents being played back, to decide whether the streaming playback is possible (step S227).

The steps S219-S227 are the processes for deciding whether or not the streaming communication is possible, based on the capability acquisition of other devices ((2-2) in FIG. 5B).

Upon deciding that the streaming communication by the Bluetooth communication control units 100-13 is possible (Yes in step S227), the short-distance wireless communication units 100-12 issues an open request of Bluetooth A2DP (step S228), the content transfer of Bluetooth A2DP is started, and after that, the streaming communication is started (step S229). Accordingly, the short-distance wireless communication units 100-12 receive data such as the response to the open request (step S228), and the like (step S230).

The steps S228-S230 are the processes for switching the wireless communication unit ((2-3 in FIG. 5B).

After that, the short-distance wireless communication units 100-12 of the own-device 100 issues a playback stop request of contents to the counterpart device 200 via the WLAN communication control units 100-14 (step S231), and when the streaming communication by DLNA using the WLAN device is stopped (steps 232 and S233), receive a playback stop response of contents S234). Thus, in the second sequence diagram in FIGs. 5A and 5B, the data transfer using WLAN and data transfer using Bluetooth overlap as well.

The steps S231-S234 are the process for disconnecting Bluetooth A2DP ((2-4) in FIG. 5B).

FIGs. 6A and 6B are the third sequence diagrams in an embodiment.

In the third sequence diagrams in FIGs. 6A and 6B, the short-distance wireless communication units 200-12 of the content transmitting apparatus 200 switch the Bluetooth communication control units 200-13 to the WLAN communication control units 200-14 when the following two conditions are satisfied. The content receiving apparatus 100 is the same as in the sequence diagram 1 in FIGs. 4A and 4B.

One of the two conditions is that the short-distance wireless communication units 200-12 decide that the communication quality of the Bluetooth communication control units 200-13 does not satisfy the criterion. Another is that there is a request from the short-distance wireless communication units 100-12 of the content receiving apparatus 100 to switch the wireless communication to perform the streaming communication from the Bluetooth communication control units 200-13 to the WLAN communication control units 200-14. In these points, the third sequence diagram in FIGs. 6A and 6B differs from the first sequence diagram in FIGs. 4A and 4B.

According to the streaming channel establish request (step S301), the short-distance wireless communication units 100-12 of the own-device 100 makes the Bluetooth communication control units 100-13 establish Bluetooth A2DP connection with the Bluetooth communication control units 200-13 of the counterpart device 100 being the mobile phone 10 for example (step S302, S303).

When the connection is established, a connection response is made to the short-distance wireless communication units 100-12 of the own-device 100 (step S304), and also a connection notification is sent to the short-distance wireless communication units 200-12 of the counterpart device 200 (step S305).

According to a streaming data transfer request (S306), the short-distance wireless communication units 100-12 of the own-device 100 makes a request for opening Bluetooth A2DP to the Bluetooth communication control units 100-13 (step S307). Accordingly, a notification of a content playback request is sent to the streaming playback control unit 16 of the counterpart device 200 illustrated in FIG. 3 by the Bluetooth communication control units 200-13 and short-distance wireless communication units 200-12 (step S308 and step S309), and the streaming communication is performed (step S310).

The steps S301-S310 are the processes for the Bluetooth streaming communication ((3-1) in FIG. 6A).

When the communication quality of the Bluetooth streaming communication deteriorates (step S310-1), a plurality of error packets are generated, and the short-distance wireless communication units 100-12 receives a notification of failure in receiving data from the Bluetooth communication control units 100-13 (step S311, S313). In addition, a transmission error notification is sent to the short-distance wireless communication units 100-12 of the counterpart device 200 (step S312 and S314).

The short-distance wireless communication units 100-12 of the own-device 100 decides whether a criterion of the communication quality is satisfied, by whether the allowable data missing rate (transfer error rate) according to the encoding scheme, the packet size and the like is exceeded or not, for example (step S135).

The steps S310-1-S315 is the processes based on the deterioration of the communication quality ((3-2) in FIG. 6A).

Upon deciding that it is impossible to secure the communication quality (No in step S315), the short-distance wireless communication units 100-12 of the own-device 100 makes the WLAN communication control units 100-14 establish WLAN communication with the WLAN communication control units 200-14 of the counterpart device 200 (step S316 and S317). Then, a connection response is transmitted to the own-device 100 (step S318), and a connection notification is sent to the counterpart device 200 (step S319).

After that, the short-distance wireless communication units 100-12 of the own-device 100 decides whether it is possible to secure the communication quality determined in advance (step S320). The decision of the communication quality may be made by whether the allowable data missing rate (transfer error rate) according to the encoding scheme, the packet size and the like is exceeded or not, for example, in a similar manner as in step S315.

The steps S316-S320 above is the processes for WLAN communication ((3-3) in FIG. 6A).

Upon deciding that the WLAN communication quality satisfies the criterion (Yes in step S320), the short-distance wireless communication units 100-12 of the own-device 100 give an instruction to the DLNA device operation control unit 15 and requests for obtaining the capability of DLNA devices in the surroundings using the WLAN connection (step S321).

Based on the capability acquisition request (step S321), the WLAN communication control units 100-14 search DLNA devices from other devices (steps S322 and S323), detect device information such as whether they are a device equipped with the DMS transmission to transmit contents in the search result (steps S324 and S325), and obtains contents information (a contents list for example) (steps S326 and S327).

According to a response to these capability acquisition request (step S328), the short-distance wireless communication units 100-12 decide whether another device (the counterpart device 200) is a device that is capable of succeeding the streaming communication and is capable of streaming communication (step S329).

The steps S321-S329 are the processes for deciding whether or not streaming communication is possible based on the capability acquisition of other devices ((5-4) in FIGs. 6A and 6B).

When it is decided that it is possible to succeed the streaming communication by WLAN with the counterpart device 200 (Yes in step S329), the DLNA device operation control unit 15 of the own-device 100 issues a content playback request to the counterpart device 200 by the short-distance wireless communication units 100-12 via the WLAN communication control units 100-14 (step S330).

In the playback request, the WLAN communication control units 100-14 makes a request for content acquisition to the WLAN communication control units 200-14 of the counterpart device 200 (step S331).

Here, the short-distance wireless communication units 200-12 of the counterpart device 200 switch the Bluetooth communication control units 200-13 to the WLAN communication control units 200-14 as requested by the own-device 100, when the following two conditions are satisfied.

One of the two conditions is that the short-distance wireless communication units 200-12 decide that the communication quality of the Bluetooth communication control units 200-13 does not satisfy a criterion. This may be decided by the number of transmission error notifications (step S312, S313) for example. Another is that there is a request from the short-distance wireless communication units 100-12 of the content receiving apparatus 100 to switch the wireless communication unit on the transmitting side to perform the streaming communication from the Bluetooth communication control units 200-13 to the WLAN communication control units 200-14.

When the two conditions are satisfied, the short-distance wireless communication units 200-12 send a notification of a content playback request to the streaming playback control unit 16 illustrated in FIG. 3, by the Bluetooth communication control units 200-13 and the short-distance wireless communication units 200-12 (step S332 and step S333).

Accordingly, content transfer (step S334) is started, and after that, streaming communication (S335) is started.

After a playback reply of contents from the WLAN communication control units 100-14 (step S336), the short-distance wireless communication units 100-12 of the own-device 100 issues a close request for Bluetooth A2DP to the BT communication control units 100-13 (step S337), and a disconnection process of Bluetooth A2DP (step S338) is performed.

A close response (step S339) is sent to the short-distance wireless communication units 100-12 of the own-device 100, and for the counterpart device 200, a notification of a content playback stop request is sent to the streaming playback control unit 16 by the Bluetooth communication control units 200-13 and the short-distance wireless communication units 200-12 (step S340 and step S341).

Thus, the short-distance wireless communication units 100-12 issues a content transfer request to the WLAN communication control units 100-14 to start streaming playback by DLNA on WLAN, and after performing the data transfer for the streaming playback by DLNA and the data transfer by streaming by BT A2DP simultaneously for a period of time determined in advance, stop the BT A2DP streaming playback and perform the switching.

The step 5330-5341 above are the processes for switching the communication scheme ((3-5) in FIG. 6B).

FIGS. 7A and 7B are fourth sequence diagrams in an embodiment.

In the fourth sequence diagram in FIG. 7A and 7B, the short-distance wireless communication units 200-12 performs the switching from the WLAN communication control units 200-14 to the Bluetooth communication control units 200-13, when there is a request from the short-distance wireless communication units 100-12 of the content receiving apparatus 100 to switch the wireless communication unit from the WLAN communication control units 200-14 to the Bluetooth communication control units 200-13. In this point, the fourth sequence diagram in FIGs. 7A and 7B differs from the second sequence diagram in FIGs. 5A and 5B. The content receiving apparatus 100 is the same as in the second sequence diagram in FIGs. 5A and 5B.

First, according to a streaming channel establish request (step S401), the short-distance wireless communication units 100-12 of the own-device 100 being the content receiving apparatus 100 makes the Bluetooth communication control units 100-13 establish WLAN connection with the Bluetooth communication control units 200-13 of the counterpart device 200 to transmit contents (step S402, S403).

Here, the own-device 100 is, for example, the mobile phone 10 that receives contents from the AV devices 2, 3, or a head set that receives contents from the mobile phone 10.

In addition, the counterpart device 200 is the mobile phone 10 that transmits contents to the head set, or the AV devices 2, 3 that transmits contents to the mobile phone 10.

The short-distance wireless communication units 100-12 of the own-device 100 receives a connection response from the WLAN communication control units 100-14 (step S404), and the short-distance wireless communication units 200-12 of the counterpart device 200 receives a connection response from the WLAN communication control units 2000-14 (step S405).

The short-distance wireless communication units 100-12 of the own-device 100 decides whether the communication quality satisfies the communication quality satisfies a criterion determined in advance (step S406). The decision of the communication quality may be decided by whether the allowable data missing rate (transfer error rate) according to the encoding scheme, the packet size and the like is exceeded or not, for example, in the same manner as in steps S110 and S114 in FIG. 4A.

Upon deciding that the communication quality of WLAN satisfies the criterion, (Yes in step S406), the short-distance wireless communication units 100-12 of the own-device 100 give an instruction to the DLNA device operation control unit 15 illustrated in FIG. 2 and requests for obtaining the capability of DLNA devices in the surroundings using the WLAN connection (step S407).

Based on the capability acquisition request (step S407), the WLAN communication control units 100-14 search DLNA devices from other devices (WLAN communication control units 200-14 of the counterpart device 200) (steps S408 and S409), detect device information such as whether they are a device equipped with the DMS transmission to transmit contents in the search result (steps S410 and S411), and obtains contents information (a contents list for example) (steps S412 and S413).

According to a response to these capability acquisition request (step S424), the short-distance wireless communication units 100-12 of the own-device 100 issues a content playback request to the counterpart device 200 via the WLAN communication control units 100-14 (step S416).

According to the playback request, the WLAN communication control units 100-14 makes a request for content acquisition to the WLAN communication control units 200-14 of the counterpart device 200 (step S417). Meanwhile, the WLAN communication control units 200-14 receive a content transfer request from the short-distance wireless communication units 200-12 (steps S418, S419), and content transfer (step S420) and streaming communication (S421) is started.

The steps S401-S421 above are the processes for streaming communication ((4-1) in FIG. 7A).

The short-distance wireless communication units 100-12 of the own-device 100 makes a request for obtaining the Bluetooth capability at intervals determined in advance (step S422).

According to the capability acquisition request (step S422), the short-distance wireless control 100-12 makes the BT communication control units 100-13 search other devices (the BT communication control units 200-13 of the counterpart device 200) (steps S423 and S424), and after an acquisition response of capability such as data for deciding the communication quality such as the RSSI (Received Signal Strength Indication) value and the like (step S425), establish Bluetooth A2DP connection with Bluetooth devices that has a possibility of becoming the connection target (steps S426-S428).

Then, a notification of a content transfer request is sent from the own-device 100 to the Bluetooth communication unit 200-13 of the counterpart device 200 (steps S429, S430).

After a connection response from the Bluetooth communication control units 100-13 (step S431), the short-distance wireless communication units 100-12 decide whether or not the communication quality satisfies a criterion determined in advance, and, whether or not the counterpart device 200 supports the data transfer procedures with which streaming communication of the contents being played back, to decide whether the streaming playback is possible (step S432).

The step S422-S432 above are the processes for deciding whether or not it is possible to perform streaming communication, based on the capability acquisition of another device ((4-2) in FIG. 7B).

Upon deciding that the streaming communication is possible (Yes in step S432), the short-distance wireless communication units 100-12 issues an open request of Bluetooth A2DP (step S228) to the Bluetooth communication control units 100-13 (step S433).

Here, the short-distance wireless communication units 200-12 of the content transmitting apparatus 200 performs the switching from the WLAN communication control units 200-14 to the Bluetooth communication control units 200-13, when there is a request from the short-distance wireless communication units 100-12 of the content receiving apparatus 100 to switch the wireless communication unit on the transmitting side to perform the streaming from the WLAN communication control units 200-14 to the Bluetooth communication control units 200-13.

When the Bluetooth A2DP streaming communication is started (step S434), streaming data is obtained by the wireless communication units 100-12 of the own-device 100 (step S435).

The steps S433-S435 above are the processes for switching the wireless communication unit ((4-3) in FIG. 7B).

After that, the short-distance wireless communication units 100-12 of the own-device 100 issues a request to stop the content transfer (playback) by the WLAN communication control units 200-14 to the counterpart device 200. In addition, when the streaming communication by DLNA using the WLAN communication is stopped (steps S437 and S438), the short-distance wireless communication units 100-12 receives a content playback stop response (S439). Then, the WLAN communication control units 200-14 and the wireless communication units 200-12 of the counterpart device 200 stop the content playback in the counterpart device 200 (steps S440, S441).

Thus, in the fourth sequence diagram in FIGs. 7A and 7B, the data transfer using WLAN and data transfer using Bluetooth overlap as well.

The steps S436-S441 are the processes for disconnecting Bluetooth, A2DP ((4-4) in FIG. 7B).

In the embodiment described above, the switching unit 107 (short-distance wireless communication unit 12) switches the wireless communication unit to perform streaming communication of contents from the first wireless communication unit 101 to the second wireless communication unit 102 by the following three decision conditions.

The first of the three decision conditions is that the communication quality decision unit 104 (short-distance wireless communication unit 12) decides that the communication quality of the first wireless communication unit 101 (Bluetooth communication control unit 13) performing the streaming communication does not satisfy a criterion.

The second of the three decision condition is that the communication quality decision unit 104 (short-distance wireless communication unit 12) decides that the communication quality of the second wireless communication unit 102 (WLAN communication control unit 14) satisfies a criterion.

The third of the three decision conditions is that the transmitting apparatus decision unit 106 (DLNA device operation control unit 15) decides that another wireless communication apparatus (content transmitting apparatus 200) is capable of transmitting contents in the transmission scheme of the second wireless communication unit 102.

For this reason, in the present embodiment, even when the communication quality of the streaming communication deteriorates, it becomes possible to perform the streaming communication appropriately by switching from the first wireless communication unit to the second wireless communication unit with a larger transmission power.

In addition, in the present embodiment, the short-distance wireless communication units 100-12 of the content receiving apparatus 100 decides whether the communication quality of the Bluetooth communication control units 100-13 satisfies a criterion by polling for example while the WLAN communication control units 100-14 is performing the streaming communication. The short-distance wireless communication units 100-12 is able to switch from the WLAN communication control units 100-14 to the Bluetooth communication control units 100-13 with a smaller transmission power, when it is decided that the criterion is satisfied and it is also decided by the DLNA device operation control unit 15 that the WLAN communication control units 100-14 are capable of transmitting contents in the communication scheme of the Bluetooth communication control units 100-13.

In addition, in the present embodiment, the switching unit 107 selects, from a plurality of wireless communication units, the second wireless communication unit 102 with the WLAN communication control unit 14 being an example, as the one with the smallest consumption power among those that satisfy the criterion of the communication quality, in terms of the communication quality monitored by the communication quality monitoring unit 103 and the consumption power. Therefore, the streaming communication may be performed appropriately.

In addition, in the present embodiment, the switching unit 107 discontinues the reception of contents by the wireless communication unit before switching after the switching of the wireless communication unit to perform streaming communication is completed. For this reason, it becomes possible to prevent the generation of broken sound more certainly.

In addition, in the present embodiment, an unintentional generation of the unintentional broken sound and the like may be prevented more certainly, when the switching unit 107 discontinues the reception of contents by the wireless communication unit before switching, before the switching of the wireless communication unit to perform streaming communication is completed.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A wireless communication apparatus (100) comprising:
a first wireless communication unit (13, 101);
a second wireless communication unit (14, 102) with a different communication scheme from the first wireless communication unit;
a communication quality monitoring unit (12, 103) to monitor communication quality of the first wireless communication unit and the second wireless communication unit;
a communication quality decision unit (12, 104) decide whether monitored communication quality satisfies a criterion determined in advance;
a streaming playback unit (16, 105) to perform streaming playback of a content received by the first wireless communication apparatus or the second wireless communication apparatus;
a transmitting apparatus decision unit (15, 106) to decide whether monitored communication quality satisfies a criterion determined in advance; and
a switching unit (12, 107) to switch the wireless communication unit (13, 101, 14, 102) to perform streaming communication of a content played back by the streaming playback unit from the first wireless communication unit (13, 101) to the second wireless communication unit (14, 102) when the communication quality decision unit decides that the communication quality of the first wireless communication unit performing streaming communication of the content does not satisfy the criterion and that the communication quality of the second wireless communication unit satisfies the criterion and the transmitting apparatus decision unit decides that the other wireless communication unit is capable of transmitting the contents in the communication scheme of the second wireless communication apparatus.

2. The wireless communication apparatus according to claim 1, wherein
the second wireless communication unit (14, 102) uses a communication scheme with a larger transmission power than the communication scheme of the first wireless communication unit.

3. The wireless communication apparatus according to claim 1 or 2, wherein
the switching unit (12, 107) switches the wireless communication unit to perform streaming communication from the second wireless communication unit to the first wireless communication unit when the communication quality decision unit (12, 104) decides that the communication quality of the first wireless communication unit satisfies the criterion and the transmitting apparatus decision unit (15, 106) decides that the other wireless communication the first wireless communication unit is capable of transmitting the content in the communication scheme of the first wireless communication unit, while the second wireless communication unit is performing streaming communication of the content.

4. The wireless communication apparatus according to one of claims 1 to 3, wherein
the switching unit (12, 107) selects, from a plurality of wireless communication units (13, 101, 14, 102), the second wireless communication unit based on communication quality of the plurality of wireless communication units monitored by the communication quality monitoring unit (12, 103) and a consumption power of the plurality of wireless communication units.

5. The wireless communication apparatus according to one of claims 1 to 4, wherein
the switching unit (12, 107) discontinues, after switching of the wireless communication unit to perform streaming communication is completed, reception of the content by the wireless communication unit before the switching.

6. The wireless communication apparatus according to one of claims 1 to 4, wherein
the switching unit (12, 107) discontinues, before switching of the wireless communication unit to perform streaming communication is completed, reception of the content by the wireless communication unit before the switching.

7. A wireless communication system (1) comprising:
a content receiving apparatus (100) being the wireless communication apparatus according to one of claims 1 to 6;
a content transmitting apparatus (200) to transmit a content to the content receiving apparatus;
wherein
the content transmitting apparatus (200) comprises:
a first transmitting-side wireless communication unit (201) connectable to the first wireless communication unit of the content receiving apparatus;
a second transmitting-side wireless communication, unit (202) connectable to the second wireless communication unit of the content receiving apparatus;
a transmitting-side communication quality monitoring unit (203) to monitor communication quality of the first transmitting-side wireless communication unit and the second transmitting-side wireless communication unit;
a transmitting-side communication quality decision unit (204) to decide whether monitored communication quality satisfies a criterion; and
a transmitting-side switching unit (206) to switch the transmitting-side wireless communication unit to perform streaming communication from the first transmitting-side wireless communication unit to the second transmitting-side wireless communication unit when the transmitting-side communication quality decision unit decides that the communication quality of the first transmitting-side wireless communication unit performing streaming communication of the content does not satisfy the criterion and there is a request from the swithing unit (107) of the content receiving apparatus to switch the transmitting-side wireless communication unit to perform streaming communication from the first transmitting-side wireless communication unit to the second transmitting-side wireless communication unit.

8. A wireless communication method using a first wireless communication unit (13, 101) and a second wireless communication unit (14, 102) with a different communication scheme from the first wireless communication unit, comprising:
performing streaming playback of a content received by the first wireless communication unit;
monitoring communication quality of the first wireless communication unit;
deciding whether the communication quality of the first wireless communication unit satisfy a criterion decided in advance;
when it is decided that the communication quality of the first wireless communication unit does not satisfy the criterion, monitoring communication quality of the second wireless communication unit;
deciding whether the communication quality of the second wireless communication unit satisfies a criterion determined in advance and whether an other wireless communication apparatus is capable of transmitting the content in the communication scheme of the second wireless communication unit; and
when it is determined that the communication quality of the second wireless communication unit satisfies the criterion determined in advance and that the other wireless communication apparatus is capable of transmitting the content in the communication scheme of the second wireless communication unit, switching the wireless communication unit to perform streaming communication from the first wireless communication unit to the second wireless communication unit.

9. The wireless communication method according to claim 8, wherein
the second wireless communication unit (14, 102) uses a communication scheme with a larger transmission power than the communication scheme of the first wireless communication unit.

10. The wireless communication method according to claim 8 or 9, further comprising:
when it is decided, while the second wireless communication unit is performing streaming communication of the content, that the communication quality of the first wireless communication unit satisfies the criterion, and that the other wireless communication apparatus is capable of transmitting the content in the communication scheme of the first wireless communication unit, switching the wireless communication unit to perform streaming communication from the second wireless communication unit to the first wireless communication unit.

11. The wireless communication method according to one of claims 8 to 10, further comprising:
selecting from a plurality of wireless communication units (13, 101, 14, 102), the second wireless communication unit based on monitored communication quality of the plurality of wireless communication units and a consumption power of the plurality of wireless communication units.

12. The wireless communication method according to one of claims 8 to 11, further comprising:
discontinuing after switching of the wireless communication unit to perform streaming communication is completed, reception of the content by the wireless communication unit before the switching.

13. The wireless communication method according to one of claims 8 to 11, further comprising:
discontinuing before switching of the wireless communication unit to perform streaming communication is completed, reception of the content by the wireless communication unit before the switching.

14. A computer program which, when executed on apparatus comprising a first wireless communication unit (13, 101) and a second wireless communication unit (14, 102) with a different communication scheme from the first wireless communication unit, causes the apparatus to carry out a wireless communication method according to any of claims 8 to 13.
